# EUROPEAN PATENT APPLICATION

(11) **EP 4 507 191 A1**
(43) Date of publication of application: **12.02.2025**
(21) Application number: 23784586.2
(22) Date of filing: 07.03.2023
(51) Int. Cl.: H02P 29/00

(54) **SERVO ADJUSTMENT METHOD OF MOTOR DRIVING DEVICE, PROGRAM, AND SERVO ADJUSTMENT DEVICE FOR MOTOR DRIVING DEVICE**

(30) Priority: 07.04.2022 JP 2022064124
(71) Applicant: Panasonic Intellectual Property Management Co., Ltd., Kadoma-shi, Osaka 571-0057 (JP)
(72) Inventor: FUJIWARA, Hiroshi, Kadoma-shi, Osaka 571-0057 (JP); BONFILS, Sabine, Kadoma-shi, Osaka 571-0057 (JP); TAZAWA, Toru, Kadoma-shi, Osaka 571-0057 (JP); ITO, Gimpei, Kadoma-shi, Osaka 571-0057 (JP)
(74) Representative: SSM Sandmair
(86) International application number: PCT/JP2023/008570
(87) International publication number: WO 2023/195293

(57) **Abstract**

A time required for servo adjustment is shortened. A servo adjustment method of a motor driving device includes a frequency characteristic measurement step (ST13), a rigidity determination step (ST14), and an index measurement step (ST15). In frequency characteristic measurement step (ST13), the frequency characteristic of the motor operation amount with respect to the control command is measured. In rigidity determination step (ST14), the highest rigidity, which is the maximum candidate value satisfying the predetermined margin among the plurality of candidate values of the rigidity index, is determined based on the frequency characteristic. In index measurement step (ST15), the rigidity index and the command response index are combined to measure the evaluation index during the operation by the internal position command based on the command pattern or the external position command from the host device. In the servo adjustment method of the motor driving device, rigidity determination step (ST14) is executed after frequency characteristic measurement step (ST13), and index measurement step (ST15) is executed after rigidity determination step (ST14).

## Description

### TECHNICAL FIELD

The present disclosure generally relates to a servo adjustment method of a motor driving device, a program, and a servo adjustment device for a motor driving device. More specifically, it relates to a servo adjustment method of a motor driving device that drives a motor, a program, and a servo adjustment device for a motor driving device that drives a motor.

### BACKGROUND ART

Patent Literature 1 discloses a servo adjustment method of a motor driving device that drives a motor. The servo adjustment method of the motor driving device described in PTL 1 includes a characteristic measurement step (load characteristic measurement step), a rigidity determination step, and an index measurement step.

In the characteristic measurement step, the trial run function is operated in the operation pattern in which the least square estimation of the load characteristic measurement appropriately works, and the optimum estimation result is obtained. In the rigidity determination step, the rigidity index is increased while utilizing the adaptive filter function, and the highest rigidity, which is the upper limit of the rigidity index, is searched. In the index measurement step, a search pattern combining the rigidity index and the command response index is generated based on the highest rigidity in the rigidity determination step, and the evaluation index is measured and stored by the evaluation index measuring function.

### Citation List

### Patent Literature

PTL 1: Unexamined Japanese Patent Publication No. 2019-37129

### SUMMARY OF THE INVENTION

In the servo adjustment method of the motor driving device described in Patent Literature 1, as described above, the highest rigidity is searched while increasing the rigidity index in the rigidity determination step, so that the time required for servo adjustment may be long.

An object of the present disclosure is to provide a servo adjustment method of a motor driving device, a program, and a servo adjustment device for a motor driving device capable of reducing a time required for servo adjustment.

A servo adjustment method of a motor driving device according to an aspect of the present disclosure is a servo adjustment method of a motor driving device that drives a motor by outputting a control command to the motor. The control command is a command based on a motor operation command and a motor operation amount. The servo adjustment method of the motor driving device includes a frequency characteristic measurement step, a rigidity determination step, and an index measurement step. in the frequency characteristic measurement step, a frequency characteristic of the motor operation amount with respect to the control command is measured. In the rigidity determination step, a highest rigidity that is a maximum candidate value satisfying a predetermined margin among a plurality of candidate values of the rigidity index is determined based on the frequency characteristic. The rigidity index is an index for determining responsiveness of the motor driving device to disturbance. In the index measurement step, the rigidity index and the command response index are combined to measure an evaluation index during operation by an internal position command based on a command pattern or an external position command from a host device. The command response index is an index for determining responsiveness of the motor operation command. The command pattern is an operation pattern of the motor to be commanded to the motor driving device. In the servo adjustment method of the motor driving device, the rigidity determination step is executed after the frequency characteristic measurement step, and the index measurement step is executed after the rigidity determination step.

A program according to an aspect of the present disclosure is a program for causing one or more processors to execute the servo adjustment method of the motor driving device.

A servo adjustment device for a motor driving device according to an aspect of the present disclosure is a servo adjustment device for a motor driving device that drives a motor by outputting a control command to the motor. The control command is a command based on a motor operation command and a motor operation amount. The servo adjustment device of the motor driving device includes a frequency characteristic measurement partpart, a rigidity determination partpart, and an index measurement partpart. The frequency characteristic measurement partpart measures a frequency characteristic of the motor operation amount with respect to the control command. The rigidity determination partpart determines, based on the frequency characteristic, the highest rigidity that is a maximum candidate value satisfying a predetermined margin among a plurality of candidate values of the rigidity index. The rigidity index is an index for determining responsiveness of the motor driving device to disturbance. The index measurement partpart measures an evaluation index during an operation by an internal position command based on a command pattern or an external position command from a host device by combining the rigidity index and the command response index. The command response index is an index for determining responsiveness of the motor operation command. The command pattern is an operation pattern of the motor to be commanded to the motor driving device. The rigidity determination partpart determines the highest rigidity after the frequency characteristic measurement partpart measures the frequency characteristic. The index measurement partpart measures the evaluation index after the rigidity determination partpart determines the highest rigidity.

According to the servo adjustment method of the motor driving device, the program, and the servo adjustment device for the motor driving device according to one aspect of the present disclosure, it is possible to shorten the time required for servo adjustment.

### BRIEF DESCRIPTION OF THE DRAWINGS

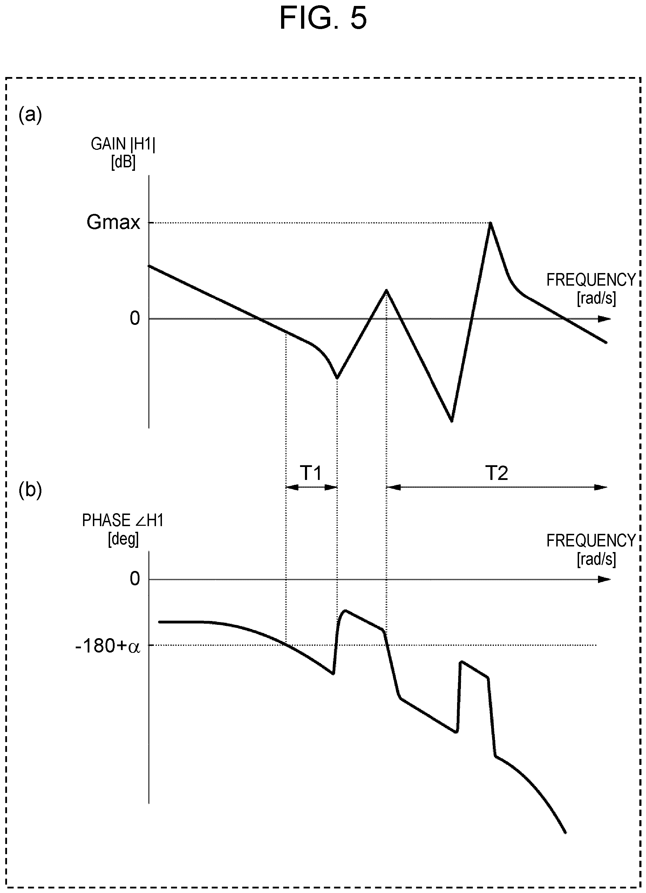

Fig. 1 is a flowchart illustrating each step of a servo adjustment method of a motor driving device according to an exemplary embodiment.
Fig. 2 is a block diagram of a motor driving device according to the exemplary embodiment.
Fig. 3 is a block diagram of a servo adjustment device of the motor driving device according to the exemplary embodiment.
Fig. 4A is a pattern diagram illustrating one command pattern of the motor driving device according to the exemplary embodiment.
Fig. 4B is a pattern diagram illustrating another command pattern of the motor driving device according to the exemplary embodiment.
Part (a) of Fig. 5 is a characteristic diagram illustrating a gain characteristic obtained by the servo adjustment method of the motor driving device according to the exemplary embodiment. Part (b) of Fig. 5 is a characteristic diagram illustrating a phase characteristic obtained by the servo adjustment method of the motor driving device according to the exemplary embodiment.

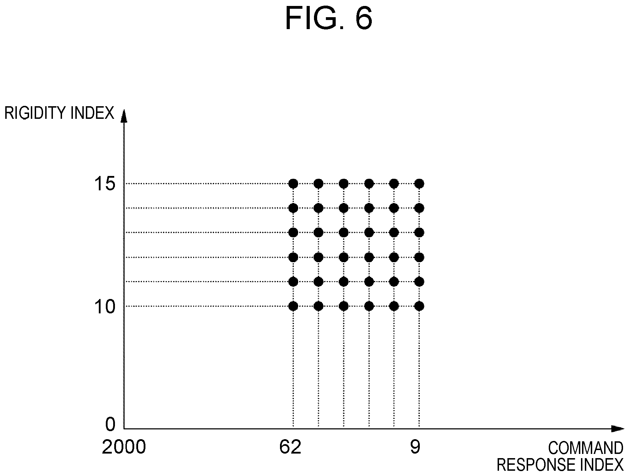

Fig. 6 is a pattern diagram illustrating a combination of a rigidity index and a command response index in the servo adjustment method of the motor driving device according to the exemplary embodiment.

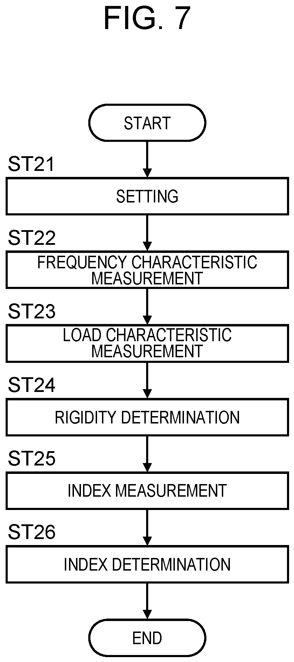

Fig. 7 is a flowchart illustrating each step of a servo adjustment method of a motor driving device according to a modification of the exemplary embodiment.

### DESCRIPTION OF EMBODIMENT

Hereinafter, a servo adjustment method of a motor driving device, a program, and a servo adjustment device for a motor driving device according to the exemplary embodiment will be described with reference to the drawings. The configuration described in the following exemplary embodiment is merely an example of the present disclosure. The present disclosure is not limited to the following exemplary embodiment, and various modifications can be made according to the design and the like as long as the effects of the present disclosure can be achieved.

### (Exemplary embodiment)

### (1) Overview

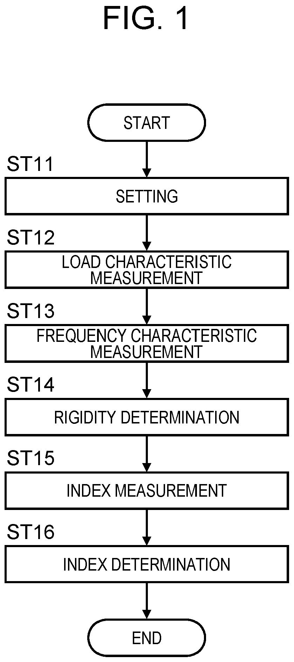

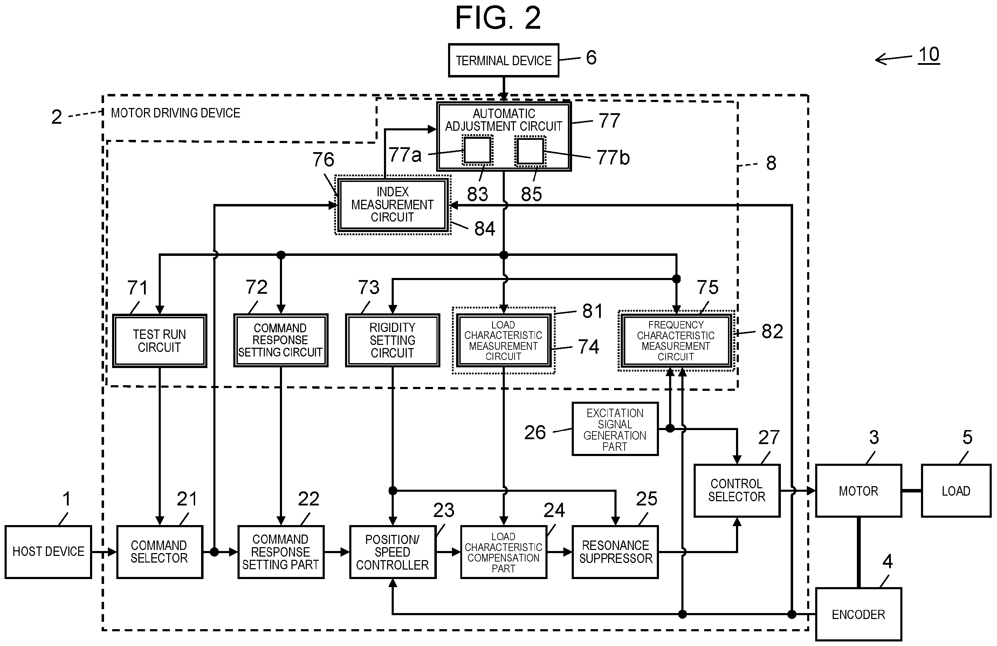

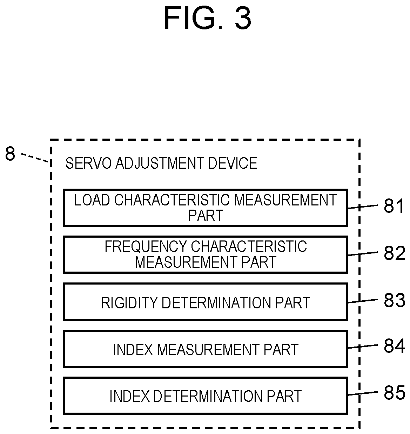

First, a servo adjustment method of motor driving device 2, a program, and servo adjustment device 8 of motor driving device 2 according to the exemplary embodiment will be described with reference to Figs. 1 to 3. Fig. 1 is a flowchart illustrating each step of a servo adjustment method of motor driving device 2 according to the exemplary embodiment. Fig. 2 is a block diagram of motor driving device 2 according to the exemplary embodiment. Fig. 3 is a block diagram of servo adjustment device 8 for motor driving device 2 according to the exemplary embodiment.

The servo adjustment method of motor driving device 2 according to the exemplary embodiment is a method for performing servo adjustment of the motor driving device 2 that drives motor 3. Motor driving device 2 is, for example, a servo amplifier (servo driver). Motor 3 is, for example, a servo motor driven (controlled) by motor driving device 2 as a servo amplifier.

Motor driving device 2 drives (controls) motor 3 by outputting a control command based on the motor operation command and the motor operation amount to motor 3. The motor operation command is, for example, an internal position command based on a command pattern to be described later or an external position command from host device 1. Host device 1 is, for example, a servo controller connected to motor driving device 2 as a servo amplifier. The motor operation amount is, for example, a rotation amount (rotation angle) of motor 3 detected by encoder 4 (position detector). The detection result of encoder 4 is fed back to motor driving device 2. The control command is, for example, a torque command calculated based on the internal position command or the external position command described above.

The servo adjustment method of motor driving device 2 according to the exemplary embodiment has the following configuration for the purpose of reducing the time required for servo adjustment.

That is, as illustrated in Fig. 1, the servo adjustment method of the motor driving device 2 according to the exemplary embodiment includes frequency characteristic measurement step ST13, rigidity determination step ST14, and index measurement step ST15. In frequency characteristic measurement step ST13, the frequency characteristic of the motor operation amount with respect to the control command is measured. In rigidity determination step ST14, a highest rigidity that is a maximum candidate value satisfying a predetermined margin among a plurality of candidate values of the rigidity index is determined based on the frequency characteristic. The rigidity index is an index for determining responsiveness of motor driving device 2 to disturbance. In index measurement step ST15, the rigidity index and the command response index are combined to measure an evaluation index during operation by an internal position command based on a command pattern or an external position command from host device 1. The command response index is an index for determining responsiveness of the motor operation command. The command pattern is an operation pattern of motor 3 to be commanded to motor driving device 2. In the servo adjustment method of motor driving device 2 according to the exemplary embodiment, rigidity determination step ST14 is executed after frequency characteristic measurement step ST13, and index measurement step ST15 is executed after rigidity determination step ST14.

In the servo adjustment method of motor driving device 2 according to the exemplary embodiment, as described above, in rigidity determination step ST14, the highest rigidity is determined based on the frequency characteristic obtained in frequency characteristic measurement step ST13. Therefore, it is not necessary to perform a work of sequentially increasing the value of the rigidity index (index value) to find the highest rigidity, and it is possible to shorten the time required for rigidity determination step ST14. As a result, the time required for servo adjustment of motor driving device 2 can be shortened. In the servo adjustment method of motor driving device 2 according to the exemplary embodiment, the highest rigidity can be determined without causing motor 3 to oscillate, so that a risk of damage due to oscillation can be avoided.

The servo adjustment method of motor driving device 2 according to the exemplary embodiment is implemented by, for example, servo adjustment device 8 as illustrated in Fig. 3. That is, servo adjustment device 8 is an aspect for embodying the servo adjustment method of motor driving device 2 described above. Servo adjustment device 8 for motor driving device 2 according to the exemplary embodiment drives motor 3 by outputting a control command based on the motor operation command and the motor operation amount to motor 3. As illustrated in Fig. 3, servo adjustment device 8 for motor driving device 2 includes frequency characteristic measurement partpart 82, rigidity determination partpart 83, and index measurement partpart 84. Frequency characteristic measurement partpart 82 measures the frequency characteristic of the motor operation amount with respect to the control command. Rigidity determination partpart 83 determines, based on the frequency characteristic described above, the highest rigidity that is the maximum candidate value satisfying the predetermined margin among the plurality of candidate values of the rigidity index. The rigidity index is an index for determining responsiveness of motor driving device 2 to disturbance. Index measurement partpart 84 combines the rigidity index and the command response index to measure an evaluation index during operation by an internal position command based on the command pattern or an external position command from host device 1. The command response index is an index for determining responsiveness of the motor operation command. The command pattern is an operation pattern of motor 3 to be commanded to motor driving device 2. In servo adjustment device 8 of motor driving device 2 according to the exemplary embodiment, rigidity determination partpart 83 determines the highest rigidity after frequency characteristic measurement partpart 82 measures the frequency characteristic, and index measurement partpart 84 measures the evaluation index after rigidity determination partpart 83 determines the highest rigidity.

Here, servo adjustment device 8 of motor driving device 2 according to the exemplary embodiment mainly includes a computer system including one or more processors and one or more memories. That is, the servo adjustment method of motor driving device 2 according to the exemplary embodiment is used on a computer system (servo adjustment device 8). That is, the servo adjustment method of motor driving device 2 can also be embodied by a program. The program according to the exemplary embodiment is a program for causing one or more processors to execute the servo adjustment method of motor driving device 2 according to the exemplary embodiment.

### (2) Details

Next, a servo adjustment method of motor driving device 2 and servo adjustment device 8 of motor driving device 2 according to the exemplary embodiment will be described in detail with reference to Figs. 1 to 6. In the following description, the "servo adjustment method of motor driving device 2" may be omitted as the "servo adjustment method", and "servo adjustment device 8 of motor driving device 2" may be omitted as "servo adjustment device 8".

As illustrated in Fig. 2, motor driving device 2 according to the exemplary embodiment configures servo system 10 together with host device 1, motor 3, encoder 4, load 5, and terminal device 6. That is, servo system 10 includes host device 1, motor driving device 2, motor 3, encoder 4, load 5, and terminal device 6. Servo system 10 is used, for example, in a manufacturing facility on a manufacturing line of an automobile manufacturing factory.

### (2.1) Host device

As described above, host device 1 is a servo controller. As illustrated in Fig. 2, host device 1 is connected to motor driving device 2 as a servo amplifier, and outputs an external position command as a motor operation command to motor driving device 2.

Host device 1 can be realized by, for example, a computer system including one or more processors and one or more memories. That is, one or more processors execute a program recorded in one or more memories of the computer system to function as host device 1. Here, the program is recorded in advance in the memory of host device 1, but for example, may be provided through a telecommunication line such as the Internet, or may be provided by being recorded in a non-transitory recording medium such as a memory card.

### (2.2) Motor driving device

As described above, motor driving device 2 is a servo amplifier (servo driver). Motor driving device 2 can be realized by, for example, a computer system including one or more processors and one or more memories. That is, one or more processors execute a program recorded in one or more memories of the computer system to function as motor driving device 2 (including also servo adjustment device 8 to be described later). Here, the program is recorded in advance in the memory of motor driving device 2, but for example, may be provided through a telecommunication line such as the Internet, or may be provided by being recorded in a non-transitory recording medium such as a memory card.

As illustrated in Fig. 2, motor driving device 2 includes command selector 21, command response setting partpart 22, position and speed controller 23, load characteristic compensation partpart 24, resonance suppressor 25, excitation signal generation part 26, and control selector 27. Each of command selector 21, command response setting part 22, position and speed controller 23, load characteristic compensation part 24, resonance suppressor 25, excitation signal generation part 26, and control selector 27 includes a circuit including an electronic component such as a resistor, a capacitor, an inductor, a memory, or a sensor. Note that each of command selector 21, command response setting part 22, position and speed controller 23, load characteristic compensation part 24, resonance suppressor 25, excitation signal generation part 26, and control selector 27 may include an integrated circuit. Note that each of command selector 21, command response setting part 22, position and speed controller 23, load characteristic compensation part 24, resonance suppressor 25, excitation signal generation part 26, and control selector 27 may constitute a part of one integrated circuit.

Command selector 21 receives an internal position command and a command selection signal as a motor operation command from test run circuit 71 to be described later. Command selector 21 also receives an external position command as a motor operation command from host device 1. That is, the motor operation command is the internal position command or the external position command described above. Command selector 21 selects the external position command or the internal position command based on the command selection signal, and outputs the selected position command to command response setting part 22. More specifically, command selector 21 selects the internal position command when receiving the command selection signal from test run circuit 71, and selects the external position command when not receiving the command selection signal from test run circuit 71.

Command response setting part 22 performs processing with various filters on an internal position command or an external position command (hereinafter, also referred to as a "first position command") that is a position command from command selector 21. Command response setting part 22 outputs, to position and speed controller 23, the position command (hereinafter, also referred to as a "second position command") subjected to the processing using the various filters. Command response setting part 22 includes a moving average filter, a first-order lag filter, a second-order filter, and a vibration control filter as various filters. The moving average filter performs moving average processing of the number of moving averages designated by command response setting circuit 72 described later. The first-order lag filter has a step response characteristic of a command response time constant. The secondary filter has a frequency characteristic defined by a secondary filter frequency and an attenuation ratio. The vibration control filter has a frequency characteristic defined by a vibration control frequency and a depth.

Position and speed controller 23 receives the second position command (the position command after the processing by the filter) from command response setting part 22. Position and speed controller 23 also receives motor position information from encoder 4. Encoder 4 is connected to motor 3 to be driven, and detects a rotational position (rotation angle) of motor 3 as motor position information. Position and speed controller 23 outputs the torque command in which the deviation between the second position command and the motor position information becomes zero.

More specifically, position and speed controller 23 first calculates a position deviation that is a difference between the second position command and the motor position information, and performs position proportional processing on the position deviation to obtain the speed command. In the position proportional processing, position and speed controller 23 multiplies the position deviation by a position loop gain designated by rigidity setting circuit 73 to be described later, and outputs the result. Next, in the speed detection processing, position and speed controller 23 obtains the motor speed corresponding to the actual speed of motor 3 based on, for example, a difference with respect to the motor position, differential calculation, and the like.

Position and speed controller 23 further calculates a speed deviation that is a difference between the speed command and the motor speed, performs speed proportional processing and speed integral processing on the speed deviation, and adds the outputs to obtain an internal torque command. Position and speed controller 23 multiplies the speed deviation by the speed loop gain designated by rigidity setting circuit 73 in the speed proportional processing, and outputs the result. In addition, position and speed controller 23 performs the speed integration using the speed loop integration time constant designated by rigidity setting circuit 73 in the speed integration processing, and outputs the result.

Position and speed controller 23 further performs torque filter processing on the internal torque command to obtain the torque command (hereinafter, also referred to as a "first torque command") that is the output. Position and speed controller 23 applies a first-order lag filter having the torque filter time constant designated by rigidity setting circuit 73 to the internal torque command in the torque filter processing, and outputs the result. Note that position and speed controller 23 may add the result after speed feedforward processing to the speed command in order to improve the responsiveness. In the speed feedforward processing, position and speed controller 23 performs processing such as a difference on the second position command and outputs the result.

Load characteristic compensation part 24 performs friction compensation by performing various types of processing on the first torque command from position and speed controller 23. Load characteristic compensation part 24 performs inertia correction processing, unbalanced load compensation processing, dynamic friction compensation processing, and viscous friction compensation processing as the various types of processing. In the inertia correction processing, load characteristic compensation part 24 performs processing of multiplying the first torque command by an inertia estimated value designated by load characteristic measurement circuit 74 described later. That is, load characteristic compensation part 24 performs scaling processing according to the total inertia of motor 3 and load 5 in the inertia correction processing. This makes it possible to absorb the difference in motor equivalent inertia that varies depending on the type of load 5.

In addition, load characteristic compensation part 24 adds an unbalanced load estimated value designated by load characteristic measurement circuit 74 to the first torque command to compensate for the unbalanced load. In the dynamic friction compensation processing, load characteristic compensation part 24 calculates the motor speed based on the motor position information from encoder 4, and adds or subtracts the dynamic friction estimated value to or from the first torque command according to the motor speed direction, thereby compensating for the dynamic friction. Further, load characteristic compensation part 24 performs compensation for viscous friction by multiplying the motor speed by a viscous friction coefficient estimated value and adding the result to the first torque command in the viscous friction compensation processing.

Load characteristic compensation part 24 outputs the torque command after performing friction compensation on the first torque command to resonance suppressor 25. As described above, load characteristic compensation part 24 performs friction compensation in various types of processing, so that it is possible to improve responsiveness and reduce a difference in response due to an operation direction and an operation speed.

Resonance suppressor 25 performs filter processing of removing a specific frequency component so that vibration is not excited by resonance characteristic of motor 3 and load 5 connected to motor 3. Resonance suppressor 25 includes a plurality of notch filters. Each of the plurality of notch filters attenuates a specific frequency band at a notch frequency, a width, and a depth designated by rigidity setting circuit 73. Resonance suppressor 25 outputs a torque command (hereinafter, also referred to as a "second torque command") after the signal passes through the filter. That is, motor driving device 2 includes resonance suppressor 25 that suppresses resonance of load 5 connected to motor 3 by removing a specific frequency band from the control command.

Excitation signal generation part 26 generates an excitation signal. The excitation signal is a signal for measuring a frequency characteristic described later by frequency characteristic measurement circuit 75 described later. The excitation signal includes a torque command. Here, since the resolution (detection accuracy of the motor speed) of encoder 4 is limited, for example, when the amplitude of the torque command is small in a case where the inertia is large, the change in the motor speed is also small, and there is a possibility that the frequency characteristic cannot be accurately measured. Therefore, the amplitude of the torque command is preferably set based on the total inertia that is the sum of the inertia of motor 3 and the inertia of load 5 connected to motor 3. In other words, in frequency characteristic measurement step ST13 (see Fig. 1) described later, it is preferable to determine the amplitude of the excitation signal for measuring the frequency characteristic on the basis of the total inertia of motor 3 and load 5. That is, when the total inertia is large, a large torque is required, and thus the amplitude of the torque command is increased. When the total inertia is small, a small torque is sufficient, and thus the amplitude of the torque command is reduced. Excitation signal generation part 26 outputs the generated excitation signal to frequency characteristic measurement circuit 75 and control selector 27.

Control selector 27 selects the second torque command from resonance suppressor 25 or a torque command (hereinafter, also referred to as a "third torque command") included in the excitation signal from excitation signal generation part 26, and outputs the selected torque command to motor 3. More specifically, when the frequency characteristic of motor 3 and load 5 is measured by frequency characteristic measurement circuit 75, the control selector 27 selects the third torque command from excitation signal generation part 26 and outputs the third torque command to motor 3. On the other hand, when frequency characteristic measurement circuit 75 does not measure the frequency characteristic of motor 3 and load 5, control selector 27 selects the second torque command from resonance suppressor 25 and outputs the second torque command to motor 3. Here, the torque command (the second torque command or the third torque command) output from control selector 27 to motor 3 is a control command.

As illustrated in Fig. 2, motor driving device 2 further includes test run circuit 71, command response setting circuit 72, rigidity setting circuit 73, load characteristic measurement circuit 74, frequency characteristic measurement circuit 75, index measurement circuit 76, and automatic adjustment circuit 77.

In test run circuit 71, information on an operation pattern such as a rotation amount (movement amount), a maximum speed, and an acceleration/deceleration time of motor 3, and control signals such as a servo ON signal and a test run start signal are input from automatic adjustment circuit 77 to be described later, and an internal position command and a command selection signal are output to command selector 21. That is, the operation pattern of motor 3 includes at least one of the rotation direction of motor 3 and the rotation amount of motor 3. As described above, when receiving the command selection signal from test run circuit 71, command selector 21 selects the internal position command.

Test run circuit 71 automatically generates a drive pattern using the information on the operation pattern from automatic adjustment circuit 77, and outputs an internal position command based on the drive pattern. In addition, test run circuit 71 outputs, based on the control signal from automatic adjustment circuit 77, a command selection signal for instructing control of the energization state of motor 3 and instructing command selector 21 to select the internal position command when the trial run start signal is turned on.

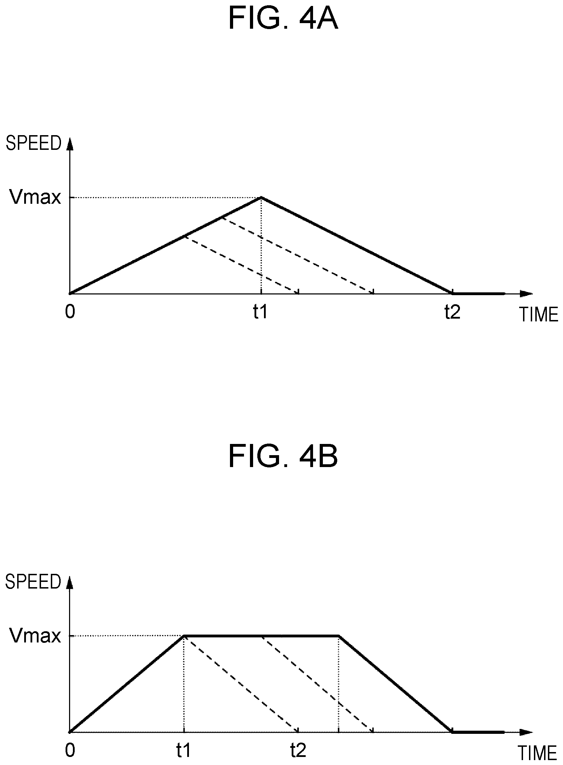

Fig. 4A is a pattern diagram illustrating one command pattern of motor driving device 2 according to the exemplary embodiment. Fig. 4B is a pattern diagram illustrating another command pattern of motor driving device 2 according to the exemplary embodiment. More specifically, Figs. 4A and 4B are pattern diagrams illustrating command patterns (drive patterns) generated by test run circuit 71. In the present exemplary embodiment, test run circuit 71 generates the command pattern illustrated in Figs. 4A and 4B from the rotation amount (movement amount) of motor 3 and the acceleration/deceleration time of motor 3. For example, when the movement amount of motor 3 is small, a speed triangular wave pattern illustrated in Fig. 4A is selected. On the other hand, the moving speed of motor 3 increases as the moving amount of motor 3 increases, and when the moving speed reaches the maximum speed Vmax, a speed trapezoidal wave pattern illustrated in Fig. 4B is selected.

In command response setting circuit 72, the moving average time and the time constant as the command response indexes and the command response index reflection start signal for starting the reflection of the command response index in command response setting part 22 are input from automatic adjustment circuit 77. Command response setting circuit 72 performs processing such as designation of a filter processing condition of command response setting part 22 based on the information and the signal. Command response setting circuit 72 executes moving average time setting processing, command response time constant setting processing, secondary filter setting processing, and vibration control filter setting processing.

When the command response index reflection start signal is on in the moving average time setting processing, command response setting circuit 72 divides the moving average time by the calculation cycle of the moving average filter of command response setting part 22 to output the number of moving averages. In the secondary filter setting processing, for example, command response setting circuit 72 fixes the attenuation ratio of the secondary filter to one, and divides the reciprocal of the time constant of the command response index by 2π to obtain the frequency of the secondary filter. In the command response time constant setting processing, command response setting circuit 72 sets the command response time constant of the first-order lag filter having the step response characteristic of the command response time constant. In the vibration control filter setting processing, command response setting circuit 72 sets the depth of the vibration control frequency of the vibration control filter of command response setting part 22 defined by the vibration control frequency and the depth.

Note that the command response index is not limited to the above-described moving average time and time constant, and may be, for example, a command response cutoff frequency, a time constant and an attenuation ratio of the first-order lag filter, a time constant and an attenuation ratio of the second-order lag filter, a rise time, a delay time, or an overshoot amount, or may be a combination thereof.

Rigidity setting circuit 73 receives the rigidity index from automatic adjustment circuit 77, and outputs the first parameter to resonance suppressor 25 with reference to a first table and a second table (see Tables 1 and 2 described below) to be described later. In rigidity setting circuit 73, the set number corresponding to the rigidity index is input from automatic adjustment circuit 77, and the second parameter set is output to position and speed controller 23 with reference to a table (hereinafter, referred to as a third table, see Table 3 described later) in which the speed loop gain and the position loop gain are associated with the rigidity value. More specifically, when the rigidity index reflection start signal from automatic adjustment circuit 77 is on, rigidity setting circuit 73 refers to the first table and the second table to output the first parameter to resonance suppressor 25, and refers to the third table to output the second parameter set to position and speed controller 23. The first parameter includes setting of a plurality of notch filters included in resonance suppressor 25. The second parameter set includes a position loop gain, a speed loop gain, a speed integration time constant, and a torque filter time constant.

Load characteristic measurement circuit 74 executes at least least-square estimation processing. Load characteristic measurement circuit 74 performs preprocessing based on the second torque command from resonance suppressor 25 and the motor position information from encoder 4 in the least squares estimation processing, and calculates a smoothed torque command, a motor speed, and a motor acceleration. In the least square estimation processing, load characteristic measurement circuit 74 outputs the inertia estimated value, the unbalanced load estimated value, the dynamic friction estimated value, and the viscous friction coefficient estimated value that minimize the difference between the information on the actual operation (torque command, motor speed, and motor acceleration described above) and the output of the load model.

Load characteristic measurement circuit 74 reflects (outputs) each estimated value to load characteristic compensation part 24 based on the estimated value reflection permission signal from automatic adjustment circuit 77. The estimated value reflection permission signal includes a first estimated value reflection permission signal corresponding to the inertia estimated value and a second estimated value reflection permission signal corresponding to the unbalanced load estimated value, the dynamic friction estimated value, and the viscous friction coefficient estimated value. For example, when it is desired to update only the inertia estimated value, the first estimated value reflection permission signal is turned on, and the second estimated value reflection permission signal is turned off. When the unbalanced load estimated value, the dynamic friction estimated value, and the viscous friction coefficient estimated value are updated, the first estimated value reflection permission signal is turned off, and the second estimated value reflection permission signal is turned on.

Part (a) of Fig. 5 is a characteristic diagram illustrating a gain characteristic obtained by the servo adjustment method of the motor driving device according to the exemplary embodiment. Part (b) of Fig. 5 is a characteristic diagram illustrating a phase characteristic obtained by the servo adjustment method of the motor driving device 2 according to the exemplary embodiment. In frequency characteristic measurement circuit 75, the excitation signal generated by excitation signal generation part 26 and the motor position information from encoder 4 are input, and the motor speed is calculated from the motor position information. Next, the frequency characteristic measurement circuit 75 samples the torque command (third torque command) and the motor speed included in the excitation signal, and performs Fourier transform on each of the sampled third torque command and motor speed. Then, frequency characteristic measurement circuit 75 subtracts the gain characteristic calculated from the Fourier transform result of the third torque command from the gain characteristic calculated from the Fourier transform result of the motor speed, thereby obtaining the gain characteristic illustrated in part (a) of Fig. 5. In addition, frequency characteristic measurement circuit 75 subtracts the phase characteristic calculated from the Fourier transform result of the third torque command from the phase characteristic calculated from the Fourier transform result of the motor speed, thereby obtaining the phase characteristic illustrated in part (b) of Fig. 5.

In index measurement circuit 76, the first position command from command selector 21 and the motor position information from encoder 4 are input. In index measurement circuit 76, measurement thresholds such as a positioning completion range and a maximum torque limit from automatic adjustment circuit 77 are input. Then, index measurement circuit 76 outputs various evaluation indexes to automatic adjustment circuit 77 according to control signals such as a measurement start signal, the number of measurements, and a maximum stop time. The evaluation index includes, for example, a positioning settling time, a delay time with respect to the position command of the second position command (position command after filtering), and an overshoot amount. The positioning settling time is defined as a time until a deviation (position deviation) between the first position command from command selector 21 and the motor position information from encoder 4 falls within the positioning completion range after the first position command stops. A command time is defined by a time during which the first position command from command selector 21 changes. The overshoot amount is defined by a value in a direction opposite to the direction of the first position command among the maximum value and the minimum value of the position deviation between the first position command and the motor position information.

Fig. 6 is a pattern diagram illustrating a combination of the rigidity index and the command response index when the evaluation index is measured by index measurement circuit 76. In the example of Fig. 6, the rigidity index includes the highest rigidity determined by a rigidity determination circuit included in automatic adjustment circuit 77 to be described later, and there are six types of index values from the highest rigidity to five levels lower. In addition, the command response index has, for example, six types including a start value and an end value determined according to the anti-resonance frequency in the frequency characteristic acquired by frequency characteristic measurement circuit 75 described above. In the example of Fig. 6, as indicated by black circles in the figure, 36 evaluation indexes are measured by executing 36 patterns. The rigidity index is, for example, a speed response frequency to be described later, and the command response index is, for example, a time constant. The evaluation index is, for example, a positioning settling time.

Automatic adjustment circuit 77 determines the highest rigidity, which is the maximum value of the rigidity index, based on the frequency characteristics shown in part (a) of Fig. 5 and part (b) of Fig. 5 obtained by frequency characteristic measurement circuit 75. Specifically, automatic adjustment circuit 77 calculates the maximum gain Gmax [dB] in the frequency band in which the phase of the obtained frequency characteristic is -180+α [deg] or less using the phase margin [dB]. Then, automatic adjustment circuit 77 calculates the highest rigidity, which is the maximum value of the speed response frequency as the rigidity index, based on the maximum gain Gmax [dB].

In addition, automatic adjustment circuit 77 selects the evaluation index closest to the target value of the evaluation index among the 36 evaluation indexes obtained by index measurement circuit 76 described above. In the present exemplary embodiment, since the evaluation index is the positioning settling time, the positioning settling time closest to the target value (target time) of the positioning settling time is selected. Automatic adjustment circuit 77 determines the index value (first index value) of the rigidity index and the index value (second index value) of the command response index, which are used to measure the selected positioning settling time (evaluation index), as the first index value of the rigidity index and the second index value of the command response index in motor driving device 2. Automatic adjustment circuit 77 outputs the first index value of the rigidity index to rigidity setting circuit 73, and outputs the second index value of the command response index to command response setting circuit 72.

That is, automatic adjustment circuit 77 includes rigidity determination circuit 77a that determines the highest rigidity, which is the maximum value of the rigidity index of motor driving device 2, and index determination circuit 77b that determines the rigidity index and the command response index of motor driving device 2.

Each of test run circuit 71, command response setting circuit 72, rigidity setting circuit 73, load characteristic measurement circuit 74, frequency characteristic measurement circuit 75, index measurement circuit 76, automatic adjustment circuit 77, rigidity determination circuit 77a, and index determination circuit 77b includes a circuit including an electronic component such as a resistor, a capacitor, an inductor, a memory, or a sensor. Each of test run circuit 71, command response setting circuit 72, rigidity setting circuit 73, load characteristic measurement circuit 74, frequency characteristic measurement circuit 75, index measurement circuit 76, automatic adjustment circuit 77, rigidity determination circuit 77a, and index determination circuit 77b may constitute a part of one integrated circuit.

### (2.3) Servo adjustment device

Test run circuit 71, command response setting circuit 72, rigidity setting circuit 73, load characteristic measurement circuit 74, frequency characteristic measurement circuit 75, index measurement circuit 76, and automatic adjustment circuit 77 described above are executed by servo adjustment device 8 (see Fig. 3). That is, motor driving device 2 further includes servo adjustment device 8 in addition to command selector 21, command response setting part 22, position and speed controller 23, load characteristic compensation part 24, resonance suppressor 25, excitation signal generation part 26, and selection controller 27 described above. As illustrated in Fig. 3, servo adjustment device 8 includes load characteristic measurement part 81, frequency characteristic measurement part 82, rigidity determination part 83, index measurement part 84, and index determination part 85.

Here, as described above, motor driving device 2 can be realized by a computer system including one or more processors and one or more memories. Therefore, servo adjustment device 8 that is a part of motor driving device 2 can also be realized by a computer system including one or more processors and one or more memories.

Load characteristic measurement part 81 executes load characteristic measurement circuit 74 described above. That is, load characteristic measurement part 81 includes load characteristic measurement circuit 74. Load characteristic measurement part 81 executes load characteristic measurement circuit 74 to measure a load characteristic that is a characteristic of load 5 connected to motor 3. Here, the load characteristic includes total inertia that is a sum of inertia of load 5 and inertia of motor 3.

Frequency characteristic measurement part 82 executes frequency characteristic measurement circuit 75 described above. That is, frequency characteristic measurement part 82 includes frequency characteristic measurement circuit 75. Frequency characteristic measurement part 82 measures the frequency characteristic of the motor operation amount with respect to the control command by executing frequency characteristic measurement circuit 75 (see part (a) of Fig. 5 and part (b) of Fig. 5).

Rigidity determination part 83 executes rigidity determination circuit 77a included in automatic adjustment circuit 77 described above. That is, rigidity determination part 83 includes rigidity determination circuit 77a. Rigidity determination part 83 executes rigidity determination circuit 77a to determine the highest rigidity, which is the maximum candidate value satisfying the predetermined margin among the plurality of candidate values of the rigidity index, based on the above-described frequency characteristic. Here, the plurality of candidate values of the rigidity index include the values of the vertical axis in Fig. 6.

Index measurement part 84 executes index measurement circuit 76 described above. That is, index measurement part 84 includes index measurement circuit 76 described above. Index measurement part 84 executes index measurement circuit 76 to combine the rigidity index and the command response index to measure an evaluation index during operation by an internal position command based on the command pattern or an external position command from host device 1.

Index determination part 85 executes index determination circuit 77b included in automatic adjustment circuit 77 described above. That is, index determination part 85 includes index determination circuit 77b. Index determination part 85 executes the index determination circuit to determine the rigidity index and the command response index of motor driving device 2.

In servo adjustment device 8 of the exemplary embodiment, rigidity determination part 83 determines the highest rigidity after frequency characteristic measurement part 82 measures the frequency characteristic. In servo adjustment device 8 of the exemplary embodiment, index measurement part 84 measures the evaluation index after rigidity determination part 83 determines the highest rigidity.

### (2.4) Motor

As described above, motor 3 is a servomotor. Motor 3 is connected to motor driving device 2, and operates (rotates) based on a torque command (second torque command or third torque command) from motor driving device 2.

### (2.5) Encoder

Encoder 4 is a rotation detector that detects the rotation of motor 3. Encoder 4 detects a rotational position (rotation amount) of motor 3 and feeds back a detection result to motor driving device 2. More specifically, encoder 4 feeds back the rotational position of motor 3, which is the detection result, to position and speed controller 23, frequency characteristic measurement circuit 75, and index measurement circuit 76. Here, the rotational position of motor 3, which is the detection result of encoder 4, corresponds to the above-described motor position information. Encoder 4 may be built in motor 3 or may be attached to motor 3 from the outside as long as the rotational position of the motor 3 can be detected.

### (2.6) Load

Load 5 is, for example, an industrial robot used in an automobile manufacturing factory. Load 5 is connected to motor 3 and moves (operates) with the rotation of motor 3. Load 5 is not limited to the industrial robot, and may be, for example, a machine tool, an electronic component mounting device, a semiconductor/liquid crystal manufacturing device, an injection molding machine, a label packaging machine, a press machine, or a medical device.

### (2.7) Terminal device

Terminal device 6 is, for example, a personal computer. Terminal device 6 is connected to motor driving device 2 (automatic adjustment circuit 77 of motor driving device 2). Terminal device 6 includes, for example, an input interface such as a mouse and a keyboard. Terminal device 6 outputs information input via the input interface to automatic adjustment circuit 77. Here, the information input to terminal device 6 via the input interface includes the target value of the evaluation index and the margin used when the highest rigidity is determined.

### (3) Servo adjustment method of motor driving device

Next, a servo adjustment method of motor driving device 2 according to the exemplary embodiment will be described with reference to Figs. 1 to 3.

A servo adjustment method of motor driving device 2 according to the exemplary embodiment is a servo adjustment method of motor driving device 2 that drives motor 3 by outputting a control command based on a motor operation command and a motor operation amount to motor 3. As illustrated in Fig. 1, the servo adjustment method of motor driving device 2 includes frequency characteristic measurement step ST13, rigidity determination step ST14, and index measurement step ST15. In frequency characteristic measurement step ST13, the frequency characteristic of the motor operation amount with respect to the control command is measured. In rigidity determination step ST14, a highest rigidity that is a maximum candidate value satisfying a predetermined margin among a plurality of candidate values of the rigidity index is determined based on the frequency characteristic. The rigidity index is an index for determining responsiveness of motor driving device 2 to disturbance. In index measurement step ST15, the rigidity index and the command response index are combined to measure an evaluation index during operation by an internal position command based on a command pattern or an external position command from host device 1. The command response index is an index for determining responsiveness of the motor operation command. The command pattern is an operation pattern of motor 3 to be commanded to motor driving device 2. In the servo adjustment method of motor driving device 2 according to the exemplary embodiment, rigidity determination step ST14 is executed after frequency characteristic measurement step ST13, and index measurement step ST15 is executed after rigidity determination step ST14.

In the servo adjustment method of motor driving device 2 according to the exemplary embodiment, as described above, in rigidity determination step ST14, the highest rigidity is determined based on the frequency characteristic obtained in frequency characteristic measurement step ST13. Therefore, it is not necessary to perform a work of sequentially increasing the value of the rigidity index (index value) to find the highest rigidity, and it is possible to shorten the time required for rigidity determination step ST14. As a result, the time required for servo adjustment of motor driving device 2 can be shortened. In the servo adjustment method of motor driving device 2 according to the exemplary embodiment, the highest rigidity can be determined without causing motor 3 to oscillate, so that a risk of damage due to oscillation can be avoided.

Hereinafter, a servo adjustment method of motor driving device 2 will be described.

As described above, the servo adjustment method of motor driving device 2 includes frequency characteristic measurement step ST13, rigidity determination step ST14, and index measurement step ST15. The servo adjustment method of motor driving device 2 further includes setting step ST11, load characteristic measurement step ST12, and index determination step ST16. In the servo adjustment method of motor driving device 2, each step is executed in the order of setting step ST11, load characteristic measurement step ST12, frequency characteristic measurement step ST13, rigidity determination step ST14, index measurement step ST15, and index determination step ST16. That is, in the servo adjustment method of motor driving device 2 according to the exemplary embodiment, load characteristic measurement step ST12 is executed before frequency characteristic measurement step ST13.

In setting step ST11, initial setting is performed. More specifically, in setting step ST11, an input of information related to a control target is received, and validity/invalidity of an initial condition and a function for each step after load characteristic measurement step ST12 is selected. The information related to the control target is, for example, a margin used when the highest rigidity is determined in rigidity determination step ST14 and a target value of the evaluation index measured in index measurement step ST15. That is, setting step ST11 is executed before frequency characteristic measurement step ST13, and sets the target value of the evaluation index and the margin.

In load characteristic measurement step ST12, load characteristic measurement part 81 of servo adjustment device 8 executes test run circuit 71 and load characteristic measurement circuit 74. That is, in load characteristic measurement step ST12, load characteristic measurement part 81 executes test run circuit 71 to perform test run (operation) of motor 3 based on a command pattern that is an operation pattern of motor 3 commanded to motor driving device 2. At this time, load characteristic measurement part 81 determines an operation pattern to be a command pattern from the plurality of operation patterns. In load characteristic measurement step ST12, load characteristic measurement part 81 executes load characteristic measurement circuit 74 to measure the load characteristic that is the characteristic of load 5 connected to motor 3.

In frequency characteristic measurement step ST13, frequency characteristic measurement part 82 of servo adjustment device 8 executes frequency characteristic measurement circuit 75 to measure the frequency characteristic of the motor operation amount with respect to the control command. More specifically, in frequency characteristic measurement step ST13, frequency characteristic measurement part 82 measures the gain characteristic illustrated in part (a) of Fig. 5 and the phase characteristic illustrated in part (b) of Fig. 5 as the above-described frequency characteristic. Here, when frequency characteristic measurement step ST13 is executed, the excitation signal generated by excitation signal generation part 26 is output to frequency characteristic measurement circuit 75 and control selector 27. As described above, the excitation signal is generated based on the total inertia that is the sum of the inertia of load 5 and the inertia of motor 3. That is, in frequency characteristic measurement step ST13, the amplitude of the excitation signal for measuring the frequency characteristic is determined based on the total inertia of motor 3 and load 5.

In rigidity determination step ST14, rigidity determination part 83 of servo adjustment device 8 executes the rigidity determination circuit to determine the highest rigidity, which is the maximum candidate value satisfying the predetermined margin among the plurality of candidate values of the rigidity index, based on the frequency characteristic. More specifically, in rigidity determination step ST14, rigidity determination part 83 determines the highest rigidity based on the frequency characteristic illustrated in part (a) of Fig. 5 and part (b) of Fig. 5. Specifically, rigidity determination part 83 calculates the maximum gain Gmax [dB] in the frequency band in which the phase of the obtained frequency characteristic is -180+α [deg] or less using phase margin α [deg]. Rigidity determination part 83 calculates the speed response frequency based on maximum gain Gmax [dB]. In part (b) of Fig. 5, section T1 and section T2 are frequency regions of - 180+α [deg] or less, and as illustrated in part (a) of Fig. 5, Gmax [dB] in section T2 is the maximum gain. Then, rigidity determination part 83 determines the speed response frequency calculated based on the maximum gain Gmax [dB] as the highest rigidity of the rigidity index. As described above, in the servo adjustment method of motor driving device 2 according to the exemplary embodiment, the highest rigidity can be obtained based on the frequency characteristic. Therefore, it is not necessary to perform a work of sequentially increasing the index value of the rigidity index to find the highest rigidity, and accordingly, it is possible to shorten the time required for rigidity determination step ST14.

Further, in rigidity determination step ST14, the setting of resonance suppressor 25 is stored in association with the rigidity index. In other words, servo adjustment device 8 including rigidity determination part 83 that executes rigidity determination step ST14 stores the table in Table 1 as the first table and the table in Table 2 as the second table. Table 1 shows setting patterns of a plurality of notch filters included in resonance suppressor 25. "fp1", "fp2", and "fp3" in Table 1 are the attenuation frequencies (center frequencies) of the respective notch filters. In Table 1, seven setting patterns are included. Table 2 shows the relationship between speed response frequency ωv as the rigidity index and the setting pattern of the notch filter. For example, when speed response frequency ωv is "ωv2", the setting pattern of "No. 7" is selected as the setting pattern of the notch filter. In this case, the notch filter corresponding to the attenuation frequencies fp2 and fp3 is selected.

**[Table 1]**

| No. | Setting content |
|---|---|
| 1 | No notch filter |
| 2 | Notch filter is set to fp1 |
| 3 | Notch filter is set to fp2 |
| 4 | Notch filter is set to fp3 |
| 5 | Notch filter is set to fp1, fp2 |
| 6 | Notch filter is set to fp1, fp3 |
| 7 | Notch filter is set to fp2, fp3 |

**[Table 2]**

| Speed response frequency (rigidity index) | Notch setting |
|---|---|
| ωv1 | No. 5 |
| ωv2 | No. 7 |
| ▪ | ▪ |
| ▪ | ▪ |
| ▪ | ▪ |
| ωv_max | No. 4 |

Table 3 shows a third table in which the set number corresponding to the rigidity index is input, and the speed loop gain and the position loop gain are associated with the rigidity value. Note that the data illustrated in Table 3 is merely an example. The data shown in Table 3 is stored in servo adjustment device 8.

**[Table 3]**

| Rigidity index (rigidity value) | Position loop gain (0.1/s) | Speed loop gain (0.1 Hz) | Speed component time constant (0.1 ms) | Torque filter time constant (0.01 ms) |
|---|---|---|---|---|
| ▪ | ... | ... | ... | ... |
| 11 | 320 | 180 | 310 | 160 |
| ▪ | ... | ... | ... | ... |

In index measurement step ST15, index measurement part 84 of servo adjustment device 8 executes index measurement circuit 76 to combine the rigidity index and the command response index to measure the evaluation index during the operation by the internal position command or the external position command. More specifically, in index measurement step ST15, motor 3 is operated in each of 36 combinations of the rigidity index and the command response index in the pattern diagram illustrated in Fig. 6, and the evaluation index in each combination is measured. Therefore, in the example of Fig. 6, 36 evaluation indexes are measured by executing index measurement step ST15. Here, in index measurement step ST15, at least one of the start value and the end value of the command response index illustrated in Fig. 6 is preferably determined according to at least one of the resonance frequency and the anti-resonance frequency in the above-described frequency characteristic. More preferably, in index measurement step ST15, both the start value and the end value of the command response index may be determined according to the anti-resonance frequency in the frequency characteristic described above.

In index determination step ST16, the index value (first index value) of the rigidity index and the index value (second index value) of the command response index corresponding to the third index value closest to the target value of the evaluation index among the plurality of (36 in the present exemplary embodiment) index values (third index values) of the evaluation indexes obtained in index measurement step ST15 are determined as the first index value and the second index value of motor driving device 2. More specifically, in index determination step ST16, index determination part 85 of servo adjustment device 8 selects the third index value closest to the target value of the evaluation index among the plurality of third index values of the evaluation index, and determines the first index value of the rigidity index and the second index value of the command response index, which are used to measure the third index value, as the first index value of the evaluation index and the second index value of the command response index in motor driving device 2.

By sequentially executing the above-described steps, servo adjustment of motor driving device 2 can be executed.

### (4) Effects

In the servo adjustment method of motor driving device 2 according to the exemplary embodiment, as described above, the highest rigidity is determined based on the frequency characteristic obtained in frequency characteristic measurement step ST13. Therefore, it is not necessary to perform a work of sequentially increasing the value of the rigidity index to find the highest rigidity, and it is possible to shorten the time required for rigidity determination step ST14. As a result, in the servo adjustment method of motor driving device 2 including rigidity determination step ST14, it is possible to shorten the time required for servo adjustment.

The servo adjustment method of motor driving device 2 according to the exemplary embodiment further includes load characteristic measurement step ST12, so that the load characteristic of load 5 connected to motor 3 can be measured.

In the servo adjustment method of motor driving device 2 according to the exemplary embodiment, load characteristic measurement step ST12 and frequency characteristic measurement step ST13 are executed before rigidity determination step ST14, so that the load characteristic and the frequency characteristic can be acquired before rigidity determination step ST14 is executed.

In the servo adjustment method of motor driving device 2 according to the exemplary embodiment, in frequency characteristic measurement step ST13, the amplitude of the excitation signal for measuring the frequency characteristic is determined based on the total inertia of motor 3 and load 5, so that the measurement accuracy of the frequency characteristic can be improved.

In the servo adjustment method of motor driving device 2 according to the exemplary embodiment, since the operation pattern to be the command pattern is determined from the plurality of operation patterns in load characteristic measurement step ST12, the operation pattern of motor 3 can be determined in load characteristic measurement step ST12.

In the servo adjustment method of motor driving device 2 according to the exemplary embodiment, since the operation pattern includes at least one of the rotation direction of motor 3 and the rotation amount of motor 3, motor 3 can be rotated based on the command pattern.

In the servo adjustment method of motor driving device 2 according to the exemplary embodiment, the setting of resonance suppressor 25 (the setting of the notch filter) and the rigidity index are stored in association with each other, so that the setting of resonance suppressor 25 corresponding to the rigidity index can immediately be derived.

In the servo adjustment method of motor driving device 2 according to the exemplary embodiment, at least one of the start value and the end value in the search range of the command response index can be determined according to at least one of the resonance frequency and the anti-resonance frequency in the frequency characteristic.

In the servo adjustment method of motor driving device 2 according to the exemplary embodiment, the evaluation index is determined by combining the plurality of first index values of the rigidity index and the plurality of second index values of the command response index, and the evaluation index closer to the target value of the evaluation index can be derived. The first index value of the rigidity index and the second index value of the command response index corresponding to the evaluation index closest to the target value can be set to the first index value of the rigidity index and the second index value of the command response index in motor driving device 2.

### (5) Modifications

The above exemplary embodiment is merely one of various exemplary embodiments of the present disclosure. The above-described exemplary embodiment can be variously changed in accordance with design and the like as long as the object of the present disclosure is achieved. In addition, functions similar to those of the servo adjustment method of motor driving device 2 according to the above-described exemplary embodiment may be embodied in servo adjustment device 8 of motor driving device 2, a (computer) program, a non-transitory recording medium recording the program, or the like. A program according to one aspect is a program for causing one or more processors to execute the servo adjustment method of motor driving device 2 described above.

Modifications of the exemplary embodiment described above will be hereinafter listed. The modifications described below may be combined and applied as appropriate.

Servo adjustment device 8 of motor driving device 2 in the present disclosure includes, for example, a computer system. The computer system mainly includes a processor and a memory as hardware. A processor executes a program recorded in a memory of a computer system, thereby implementing a function of motor driving device 2 in the present disclosure as servo adjustment device 8. The program may be recorded in advance in a memory of the computer system, may be provided through a telecommunication line, or may be provided by being recorded in a non-transitory recording medium such as a memory card, an optical disk, or a hard disk drive readable by the computer system. A processor of a computer system is composed of one or more electronic circuits including a semiconductor integrated circuit (IC) or a large-scale integrated circuit (LSI). The integrated circuit such as an IC or an LSI herein is called differently depending on the degree of integration, and includes an integrated circuit called a system LSI, a very large scale integration (VLSI), or an ultra large scale integration (ULSI). Further, a field-programmable gate array (FPGA) programmed after the manufacture of the LSI or a logic device capable of reconfiguring a bonding relationship inside the LSI or reconfiguring a circuit section inside the LSI can also be employed as the processor. The plurality of electronic circuits may be integrated into one chip, or may be provided in a distributed manner on a plurality of chips. The plurality of chips may be aggregated in one device or may be provided in a distributed manner in a plurality of devices. The computer system herein includes a microcontroller having one or more processors and one or more memories. Therefore, the microcontroller is also constituted by one or more electronic circuits including a semiconductor integrated circuit or a large-scale integrated circuit.

It is not essential for servo adjustment device 8 that the plurality of circuits in servo adjustment device 8 are integrated in one housing. The constituent elements of servo adjustment device 8 may be dispersedly provided in a plurality of housings. Furthermore, at least a part of the function of servo adjustment device 8 may be implemented by a cloud (cloud computing) or the like.

Conversely, in the above-described exemplary embodiment, at least some circuits of servo system 10 distributed in a plurality of devices may be aggregated in one housing. For example, some circuits of servo system 10 distributed in host device 1 and motor driving device 2 may be aggregated in one housing.

In the above-described exemplary embodiment, as illustrated in Fig. 1, in the servo adjustment method of motor driving device 2, frequency characteristic measurement step ST13 is executed after load characteristic measurement step ST12 is executed. On the other hand, as illustrated in Fig. 7, in the servo adjustment method of motor driving device 2, load characteristic measurement step ST23 may be executed after frequency characteristic measurement step ST22 is executed. Fig. 7 is a flowchart illustrating steps of a servo adjustment method of the motor driving device according to the modification of the exemplary embodiment. In the servo adjustment method of motor driving device 2 according to the modification, as shown in Fig. 7, each step is executed in the order of setting step ST21, frequency characteristic measurement step ST22, load characteristic measurement step ST23, rigidity determination step ST24, index measurement step ST25, and index determination step ST26. That is, in the servo adjustment method of motor driving device 2 according to the modification, load characteristic measurement step ST23 is executed after frequency characteristic measurement step ST22 and before rigidity determination step ST24. Even in this case, it is possible to measure the load characteristic and the frequency characteristic before executing rigidity determination step ST24.

### (Aspects)

The present specification discloses the following aspects.

A servo adjustment method of motor driving device (2) according to a first aspect is a servo adjustment method of motor driving device (2) that drives motor (3) by outputting a control command to motor (3). The control command is a command based on the motor operation command and the motor operation amount. The servo adjustment method of motor driving device (2) includes frequency characteristic measurement step (ST13, ST22), rigidity determination step (ST14, ST24), and index measurement step (ST15, ST25). In the frequency characteristic measurement step (ST13, ST22), the frequency characteristic of the motor operation amount with respect to the control command is measured. In rigidity determination step (ST14, ST24), the highest rigidity, which is the maximum candidate value satisfying the predetermined margin among the plurality of candidate values of the rigidity index, is determined based on the frequency characteristic. The rigidity index is an index for determining responsiveness of motor driving device (2) to disturbance. In the index measurement step, the rigidity index and the command response index are combined to measure an evaluation index during operation by an internal position command based on a command pattern or an external position command from host device (1). The command response index is an index for determining responsiveness of the motor operation command. The command pattern is an operation pattern of motor (3) that commands motor driving device (2). In the servo adjustment method of motor driving device (2), rigidity determination step (ST14, ST24) is executed after frequency characteristic measurement step (ST13, ST22), and index measurement step (ST15, ST25) is executed after rigidity determination step (ST14, ST24).

According to this aspect, it is not necessary to sequentially raise the rigidity index when the highest rigidity is determined in rigidity determination step (ST14, ST24), so that the time required for the servo adjustment can be shortened.

The servo adjustment method for motor driving device (2) according to the second aspect further includes load characteristic measurement step (ST12, ST23) in the first aspect. In load characteristic measurement step (ST12, ST23), a load characteristic that is a characteristic of load (5) connected to motor (3) is measured.

According to this aspect, it is possible to measure the characteristic of load (5) connected to motor (3).

In the servo adjustment method of motor driving device (2) according to the third aspect, in the second aspect, load characteristic measurement step (ST12) is executed before frequency characteristic measurement step (ST13).

According to this aspect, it is possible to measure the load characteristic and the frequency characteristic before executing rigidity determination step (ST24).

In a servo adjustment method of motor driving device (2) according to a fourth aspect, in the second aspect, load characteristic measurement step (ST23) is executed after frequency characteristic measurement step (ST22) and before rigidity determination step (ST24).

According to this aspect, it is possible to measure the load characteristic and the frequency characteristic before executing rigidity determination step (ST24).

In a servo adjustment method of motor driving device (2) according to a fifth aspect, in any one of the second to fourth aspects, the load characteristic includes total inertia that is a sum of inertia of load (5) and inertia of motor (3). In frequency characteristic measurement step (ST13, ST22), the amplitude of the excitation signal for measuring the frequency characteristic is determined based on the total inertia.

According to this aspect, the measurement accuracy of the frequency characteristic can be improved.

In a servo adjustment method of motor driving device (2) according to a sixth aspect, in any one of the second to fifth aspects, in load characteristic measurement step (ST12, ST23), an operation pattern to be a command pattern is further determined from the plurality of operation patterns.

According to this aspect, the operation pattern of motor (3) can be determined in load characteristic measurement step (ST12, ST23).

In a servo adjustment method of motor driving device (2) according to a seventh aspect, in any one of the second to sixth aspects, the operation pattern includes at least one of the rotation direction of motor (3) and the rotation amount of motor (3). In load characteristic measurement step (ST12, ST23), motor (3) is operated based on the command pattern.

According to this aspect, motor (3) can be rotated based on the command pattern.

In a servo adjustment method of motor driving device (2) according to an eighth aspect, in any one of the first to seventh aspects, motor driving device (2) includes resonance suppressor (25). Resonance suppressor (25) suppresses resonance of load (5) connected to motor (3) by removing a specific frequency band from the control command. In rigidity determination step (ST14, ST24), the setting of resonance suppressor (25) for removing the specific frequency band is stored in association with the rigidity index.

According to this aspect, the setting of resonance suppressor (25) corresponding to the rigidity index can immediately be derived.

In a servo adjustment method of motor driving device (2) according to a ninth aspect, in any one of the first to eighth aspects, in the index measurement step (ST15, ST25), at least one of the start value and the end value in the search range of the command response index is determined according to at least one of the resonance frequency and the anti-resonance frequency in the frequency characteristic.

According to this aspect, at least one of the start value and the end value in the search range of the command response index can be determined according to at least one of the resonance frequency and the anti-resonance frequency in the frequency characteristic.

In a servo adjustment method of motor driving device (2) according to a tenth aspect, in any one of the first to ninth aspects, in index measurement step (ST15, ST25), the evaluation index is determined by combining the plurality of first index values including the highest rigidity obtained in rigidity determination step (ST14, ST24) and the plurality of second index values of the command response index.

According to this aspect, the evaluation index can be determined based on the combination of the plurality of first index values and the plurality of second index values.

In a servo adjustment method of motor driving device (2) according to an eleventh aspect, in the tenth aspect, the plurality of third index values of the evaluation index is measured in the index measurement step (ST15, ST25). The servo adjustment method of motor driving device (2) further includes setting step (ST11, ST21) and index determination step (ST16, ST26). Setting step (ST11, ST21) is executed before frequency characteristic measurement step (ST13, ST22), and sets the target value and the margin of the evaluation index. Index determination step (ST16, ST26) is executed after index measurement step (ST15, ST25), and determines the first index value and the second index value corresponding to the third index value closest to the target value of the evaluation index among the plurality of third index values obtained in index measurement step (ST15, ST25) as the first index value and the second index value of motor driving device (2).

According to this aspect, the rigidity index and the command response index of motor driving device (2) can be set to optimum values.

In a servo adjustment method of motor driving device (2) according to a twelfth aspect, in any one of the first to eleventh aspects, the motor operation command is an internal position command or an external position command.

According to this aspect, motor (3) can be driven based on the internal position command or the external position command.

A program according to a thirteenth aspect is a program for causing one or more processors to execute the servo adjustment method of motor driving device (2) according to any one of the first to twelfth aspects.

According to this aspect, it is not necessary to sequentially raise the rigidity index when the highest rigidity is determined in rigidity determination step (ST14, ST24), so that the time required for the servo adjustment can be shortened.

Servo adjustment device (8) of motor driving device (2) according to a fourteenth aspect is servo adjustment device (8) of motor driving device (2) that drives motor (3) by outputting a control command to motor (3). The control command is a command based on the motor operation command and the motor operation amount. Servo adjustment device (8) of motor driving device (2) includes frequency characteristic measurement part (82), rigidity determination part (83), and index measurement part (84). Frequency characteristic measurement part (82) measures the frequency characteristic of the motor operation amount with respect to the control command. Rigidity determination part (83) determines, based on the frequency characteristic, the highest rigidity that is the maximum candidate value satisfying a predetermined margin among the plurality of candidate values of the rigidity index. The rigidity index is an index for determining responsiveness of motor driving device (2) to disturbance. Index measurement part (84) measures an evaluation index during an operation by an internal position command based on a command pattern or an external position command from a host device (1) by combining a rigidity index and a command response index. The command response index is an index for determining responsiveness of the motor operation command. The command pattern is an operation pattern of motor (3) that commands motor driving device (2). Rigidity determination part (83) determines the highest rigidity after frequency characteristic measurement part (82) measures the frequency characteristic. Index measurement part (84) measures the evaluation index after rigidity determination part (83) determines the highest rigidity.

According to this aspect, it is not necessary to sequentially raise the rigidity index when rigidity determination part (83) determines the highest rigidity, so that the time required for the servo adjustment can be shortened.

The configurations according to the second to twelfth aspects are not essential for the servo adjustment method of motor driving device (2), and can be omitted as appropriate.

### INDUSTRIAL APPLICABILITY

The servo adjustment method of the motor driving device, the program, and the servo adjustment device for the motor driving device of the present disclosure can reduce the time required for servo adjustment. As described above, the servo adjustment method of the motor driving device, the program, and the servo adjustment device for the motor driving device of the present disclosure are industrially useful.

### REFERENCE MARKS IN THE DRAWINGS

- 1: host device
- 2: motor driving device
- 3: motor
- 5: load
- 8: servo adjustment device
- 82: frequency characteristic measurement part
- 83: rigidity determination part
- 84: index measurement part
- ST11, ST21: setting step
- ST12, ST23: load characteristic measurement step
- ST13, ST22: frequency characteristic measurement step
- ST14, ST24: rigidity determination step
- ST15, ST25: index measurement step
- ST16, ST26: index determination step

## Claims

1. A servo adjustment method of a motor driving device that drives a motor by outputting a control command based on a motor operation command and a motor operation amount to the motor, the servo adjustment method comprising:
a frequency characteristic measurement step of measuring a frequency characteristic of the motor operation amount with respect to the control command;
a rigidity determination step of determining, based on the frequency characteristic, a highest rigidity that is a maximum candidate value satisfying a predetermined margin among a plurality of candidate values of a rigidity index for determining responsiveness of the motor driving device to disturbance; and
an index measurement step of combining the rigidity index and a command response index for determining responsiveness of the motor operation command to measure an evaluation index during operation by an internal position command based on a command pattern that is an operation pattern of the motor to be commanded to the motor driving device or an external position command from a host device,
wherein
the rigidity determination step is executed after the frequency characteristic measurement step, and
the index measurement step is executed after the rigidity determination step.

2. The servo adjustment method of the motor driving device according to Claim **1,** the method further comprising a load characteristic measurement step of measuring a load characteristic that is a characteristic of a load connected to the motor.

3. The servo adjustment method of the motor driving device according to Claim 2, wherein the load characteristic measurement step is executed before the frequency characteristic measurement step.

4. The servo adjustment method of the motor driving device according to Claim 2, wherein the load characteristic measurement step is executed after the frequency characteristic measurement step and before the rigidity determination step.

5. The servo adjustment method of the motor driving device according to any one of Claims 2 to 4, wherein
the load characteristic includes a total inertia that is a sum of inertia of the load and inertia of the motor, and
the frequency characteristic measurement step includes determining, based on the total inertia, an amplitude of an excitation signal for measuring the frequency characteristic.

6. The servo adjustment method of the motor driving device according to any one of Claims 2 to 4, wherein the load characteristic measurement step further includes determining the operation pattern to be the command pattern from a plurality of the operation patterns.

7. The servo adjustment method of the motor driving device according to any one of Claims 2 to 4, wherein
the operation pattern includes at least one of a rotation direction of the motor and a rotation amount of the motor, and
the load characteristic measurement step includes operating the motor based on the command pattern.

8. The servo adjustment method of the motor driving device according to any one of Claims 1 to 4, wherein
the motor driving device includes a resonance suppressor that suppresses resonance of a load connected to the motor by removing a specific frequency band from the control command, and
the rigidity determination step further includes storing a setting of the resonance suppressor when the specific frequency band is removed in association with the rigidity index.

9. The servo adjustment method of the motor driving device according to any one of Claims 1 to 4, wherein the index measurement step includes determining at least one of a start value and an end value in a search range of the command response index according to at least one of a resonance frequency and an anti-resonance frequency in the frequency characteristic.

10. The servo adjustment method of the motor driving device according to any one of Claims 1 to 4, wherein the index measurement step includes determining the evaluation index by combining a plurality of first index values including the highest rigidity obtained in the rigidity determination step and a plurality of second index values of the command response index.

11. The servo adjustment method of the motor driving device according to Claim 10, wherein
the index measurement step includes measuring a plurality of third index values of the evaluation index, and
the method further includes:
a setting step of setting a target value of the evaluation index and the predetermined margin, the setting step being executed before the frequency characteristic measurement step; and
an index determination step of determining the first index value and the second index value corresponding to a third index value closest to the target value of the evaluation index among the plurality of third index values obtained in the index measurement step as the first index value and the second index value of the motor driving device, the index determination step being executed after the index measurement step.

12. The servo adjustment method of the motor driving device according to any one of claims 1 to 4, wherein the motor operation command is the internal position command or the external position command.

13. A program for causing one or more processors to execute the servo adjustment method of the motor driving device according to any one of Claims 1 to 4.

14. A servo adjustment device for a motor driving device that drives a motor by outputting a control command based on a motor operation command and a motor operation amount to the motor, the servo adjustment device comprising:
a frequency characteristic measurement part that measures a frequency characteristic of the motor operation amount with respect to the control command;
a rigidity determination part that determines, based on the frequency characteristic, a highest rigidity that is a maximum candidate value satisfying a predetermined margin among a plurality of candidate values of a rigidity index for determining responsiveness of the motor driving device to disturbance; and
an index measurement part that combines the rigidity index and a command response index for determining responsiveness of the motor operation command to measure an evaluation index during operation by an internal position command based on a command pattern that is an operation pattern of the motor to be commanded to the motor driving device or an external position command from a host device,
wherein
the rigidity determination part determines the highest rigidity after the frequency characteristic measurement part measures the frequency characteristic, and
the index measurement part measures the evaluation index after the rigidity determination part determines the highest rigidity.
